# Europäisches Patentamt
## European Patent Office
## Office européen des brevets

(19)

(11) Publication number: **0 110 936**
**B1**

(12) **EUROPEAN PATENT SPECIFICATION**

(45) Date of publication of the patent specification:
**27.12.85**

(51) Int. Cl.⁴: **E 21 C 37/00**

(21) Application number: **83901745.6**

(22) Date of filing: **24.05.83**

(86) International application number:
**PCT/SE 83/00205**

(87) International publication number:
**WO 83/04279 (08.12.83 Gazette 83/28)**

(54) **Demolishing agent.**

(30) Priority: **25.05.82 SE 8203227**

(43) Date of publication of application:
**20.06.84 Bulletin 84/25**

(45) Publication of the grant of the patent:
**27.12.85 Bulletin 85/52**

(84) Designated Contracting States:
**AT BE CH DE FR GB LI LU NL**

(56) References cited:
**EP - A - 0 017 398**
**EP - A - 0 028 513**
**SE - A - 82 070 632**

**G MÖLLER, N PETERSONS, P SAMUELSSON,**
**"Betonghandbok, Material" published 1980 by AB**
**Svensk Byggtjänst (Stockholm) pages 108-117**

(73) Proprietor: **CEMENTA AB, Kalkavdelningen Box 30022,**
**S-200 61 Malmö (SE)**

(72) Inventor: **KAWERT, Kawe, Poppelvägen 8,**
**S-230 11 Falsterbo (SE)**
Inventor: **HJERTEN, Ulf, Irisdalsgatan 4, S-621 42 Visby**
**(SE)**

(74) Representative: **Onn, Thorsten et al, AB Stockholms**
**Patentbyra Zacco & Bruhn P.O. Box 3129,**
**S-103 62 Stockholm (SE)**

BUNDESDRUCKEREI BERLIN

**0 110 936**

## Description

Since some years ago attempts have been made, which to some extent have been successful, to utilize the fact, that burnt lime expands when it is being slaked and that it produces great forces in connection therewith, for replacing explosives. As lime expansion compared with explosion proceeds slowly, it is obvious that demolition by means of burnt lime has a great advantage a. o. because no safety measures must be taken.

It does not work, however, simply to use a mixture of burnt lime and water and to fill it, for example, into pre-drilled holes where a stone or the like is to be blasted. This would result in that the mixture expands in the longitudinal direction of the hole instead of widening the same. One solution in this connection can be to plug the hole in a suitable way, for example by closing the hole by pouring concrete. This implies an additional operation which, besides, cannot be carried out just like that, because the slaking of the lime and therewith the expansion start as soon as the lime oxide is slaked with the water and, therefore, one cannot be sure that the concrete plug binds and secures with sufficient safety before the expansion has commenced.

An expanding substance, therefore, is desired which easily can be poured in intended quantities, and which then forms a body without liquid properties which with adjustable time function expands in all directions. With other words, the pressure force developed by the expanding product shall exceed substantially the tensile forced in the member to be demolished. It can be mentioned in this connection that the compressive strength of natural and synthetic species of stone generally is about ten times higher than the tensile strength.

It has been succeeded to solve this by processing the burnt lime with certain substances. When the water is added, a crystal lattice or a network is formed which holds together the mass as a body. This body, of course, will be blasted when the lime during its slaking is permitted to expand. The expansion, however, substantially is not permitted to take place before the demolition well has been carried out, i. e. the internal forces can be built up and exert pressure forces, for example, on the walls of the hole, at the same time as admixed cement efficiently retains expansion in the direction out of the hole.

The problems, however, are not all solved by this, because, as will be understood, a necessary prerequisite for the aforesaid to happen is that the cement can bind sufficiently before the expansion brought about by the lime slaking becomes effective. In the European patent application 80 303 874.4, publication No 0 028 513 is described how this can be effected. According to said publication, the lime is burnt very hard to great crystals, which results in a delay of the slaking, and the cement, thus, is given time to bind before the slaking and resulting expansion commence. This process certainly works well, but has the disadvantage that the hard burning of the lime also implies a long stay time at high temperature and thereby implies high burning cost for the lime, so that this process is less economic.

In practice, therefore, in spite of the well-functioning operation there did heretofore not exist a sufficiently economic and competitive demolishing agent according to this principle. It is, therefore, the object of the present invention to suggest a demolishing product, which bases its effect on the expansion obtained at the slaking of the lime, is easy to handle, has a good effect and especially good economy even in comparison to explosives.

This object is achieved according to the invention as defined in claim 1. Method claim 9 proposes that together with ordinary burnt lime in the same process step an agent of organic type retarding the lime slaking is ground. In a subsequent process step a hydraulic component and a plasticizing agent are added. The retarding agent of organic type may be, for example, sugar species, which from the concrete industry have proved to act as »poisons« even in relatively small quantities.

The principle and function of the invention are described in greater detail in the following by way of embodiments and with reference to the accompanying diagrams.

In the Table below are listed the different mixtures, which have been used at the experiment photographed.

    Mixture 1: 80% CaO + 20% cement/1% R-agent/2% plasticizer
    Mixture 2: 60% CaO + 40% cement/1% R-agent/2% plasticizer
    Mixture 3: 80% CaO + 20% cement/2% R-agent/2% plasticizer
    Mixture 4: 60% CaO + 40% cement/2% R-agent/2% plasticizer
    Mixture 5: Bristar 200

R-agent in the above Table is to be understood to be a slaking-retarding agent of organic type.

Bristar® is the name under which a demolishing agent according to the aforesaid European patent application is marketed. This agent was included for comparison.

The different mixtures were prepared in such a manner, that unslaked lime with a size of 0—2 mm was ground in batches of 5000 grams while the R-agent was added. The grinding time was 15 effective grinding and 19 minutes emptying grinding. The object was to obtain a fineness corresponding to that of »Bristar 200«. The grinding was divided into steps in such a way, that at the first grinding 500 g of unslaked lime (CaO) was ground, in the second step 4950 g of unslaked lime plus 50 g of R-agent, and in the third step 4900 g of unslaked lime was ground with 100 g of R-agent.

2

To these lime samples standard cement was then supplied during 10 minutes effective grinding and 10 minutes emptying grinding. In order to finally render possible a good filling of the holes and a good strength, 2% fluid addition in powder state was added in order to reduce the viscosity even at moderate watter additions.

Thereafter the demolishing agent in ready state was mixed at its application with water to a water product number, vpt, = p,35.

At the grinding can be noted that there were no problems involved with the grinding and subsequent mixings. After the addition of water the viscosity was compared to Bristar 200, which was mixed according to prescriptions. It could be observed that the mixtures 2, 4 and 5 had about the same viscosity, while 1 and 3 were slightly more viscous than Bristar. The prepared slurries were applied in concrete cubes of 150 × 150 mm stored for about 1 year and corresponding concrete K600 (650 kp/ cm²), in which a hole was drilled to a depth of about 105 mm and with a diameter of 25 mm. The cubes were filled to overflow and placed in room environment. The procedure of events was recorded by a camera every 30th minute for more than 24 hours.

The first crack formation could be observed after 6 hours on the cubes for the mixtures 1 and 3. The mixtures 2 and 4 (picture 7) gave rise to crack formation in the cubes after 19 hours, and the reference cube filled with Bristar 200 cracked after 20 hours. After the first crack formation the cracks widened substantially on all sample bodies. The demolishion can be regarded total.

From the aforesaid experiments can be concluded that the expansion and explosive strength of the mixtures depend on the lime/cement ratio to a higher degree than on the ratio between the lime and retading agent. The agent according to the invention did not show, either, any tendency to be blown out of the hole, but maintained a solid shape, different from the reference agent which more or less was pulverized at the opening of the hole.

The slaking-reducing effect of lime with retarding agent according to the invention was also determined by slaking curves according to the method Bundesverband, which are represented in the accompanying diagrams. It can be stated that the difference between 1% R-agent (curve 2) and 2% R-agent (curve 3) is not so great, while the difference compared to unaffected unslaked lime (curve 1) is substantial where lime without retarding agent has a considerably faster slaking process.

In the first case between 1% and 2% R, in order to achieve 50° C, the difference is 10 minutes. In the second case between 0% R and 1—2% R the difference for achieving 50° C is 150 minutes.

A further test experiment was made in the form of a pilot experiment on natural stone. It was carried out in order to see what happens when the material is harder than concrete. The stones in question consisted of grey granite with grains of calcite, volume about 0,8 cubic metre, temperature +10° C. 4 holes were drilled aligned and in the longitudinal direction for the stones. The hole diameter was 37 mm and the hole depth amounted to 70% of the height of the stone at the respective hole. Mixture 1 was used for the experiment, and the holes were filled to overflow.

The first crack formation could be discovered after 9,5 hours about the holes. After about 10,5 hours crack formation was observed in the longitudinal direction between the holes. Total crack formation in the longitudinal direction between the holes was obtained after 11 hours and at about 12 hours the stone was cleaved and the pieces had fallen apart. 0,5 hour thereafter the stone was cleaved also in the transverse direction, and in addition a blasting effect downward to the lower side could be detected.

As the lime according to the invention is retarded by using an agent or agents which also for the cement used has the character of a retarding agent, it was studied whether long-time storage of the demolishing product in accordance with the invention (in dry state) results in some infection from the lime to the cement, i. e. in some transfer of the retarding agent from the lime to the cement. No reaction whatsoever of this kind could be measured even after one year storage, and probably the demolishing product according to the invention can be stored several years without the risk of ageing in this way. This is probably the most surprising feature of the invention, because it could have been expected that the retarding agent to a certain extent also adheres on the cement, in which connection also the mechanic working should be observed which takes place when the cement is mixed with the lime. It is at this moment not entirely clear the background thereof, but it should be noted that the effect is not critical, but seems to prevail within the entire percentage range tested so far for the addition of retarding agent. It seems, with other words, as if the lime is capable at its particles to lock or fixes a greater amount of retarding agent than what it practically needs for bringing about the desired retarding effect. This fact, that the addition of retarding agent is not critical, facilitates the production substantially.

Experiments further indicate that the coating of the lime with a retarding coat according to the invention during the final grinding of the lime can improve the effect of the demolishing product when in one of the process steps an antifoaming agent is added, which, for example, may be polyphospates, polyephthalates, alcohols and reduces the proportion of air inclusions at the application, which increases the effective blasting capacity per volume.

The addition of plasticizers to the demolishing product according to the invention also has the object to improve the economic yield. By means of the plasticizer the water content at the application can be held down close to what is required for the reaction of the cement and, respectively, the slaking of the lime. As it is possible, so to speak, to avoid water as »ballast« in the demolishing product, the effective expansion per volume of the demolishing product is at optimum. The plasticizer has not only the object to hold down the water content in the product, but also shall ensure that the viscosity for the product when it has been mixed with water is such, that it comfortably can be poured down, for example, into drill holes.

Unfortunately it is not sufficient with the addition of plasticizer for effecting the desired viscosity at optimum water amount, which optimum water amount is to be understood as the water amount required for the reactions with lime and cement. This problem can be solved by adding dispersing agent, and for this purpose especially a dispersing agent not entraining air is suggested, for example hydroxylamines, sulfonated alkyls or triethanolamine.

When according to the invention the water content was reduced close to what at optimum is required for a complete reaction, i. e. very little water excess, it is practically found that the lime itself can form the solid body without cement addition.

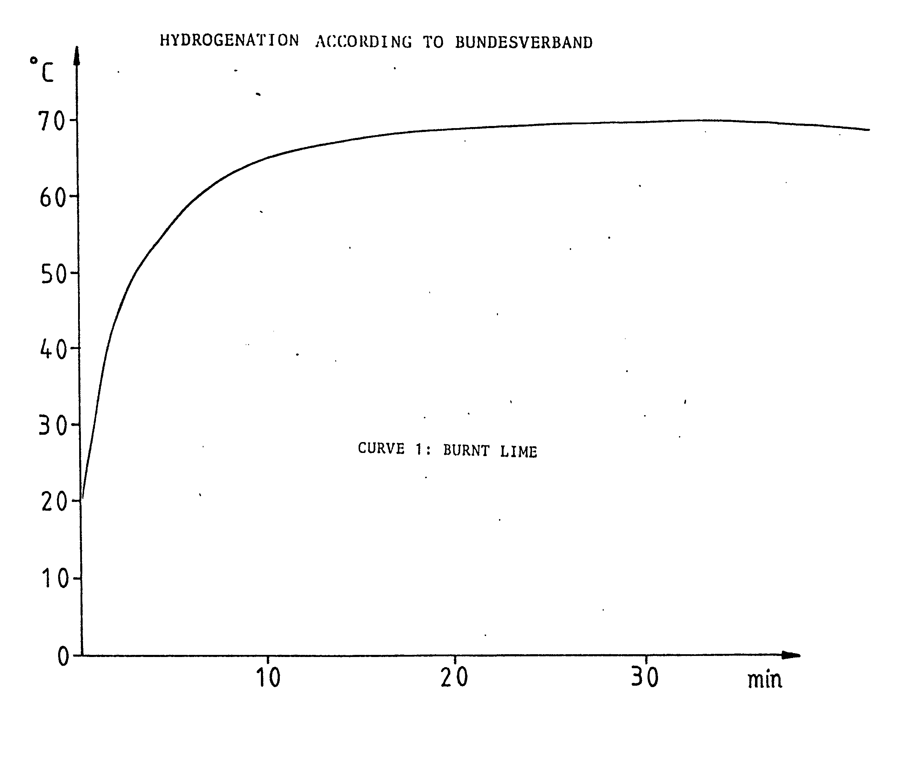

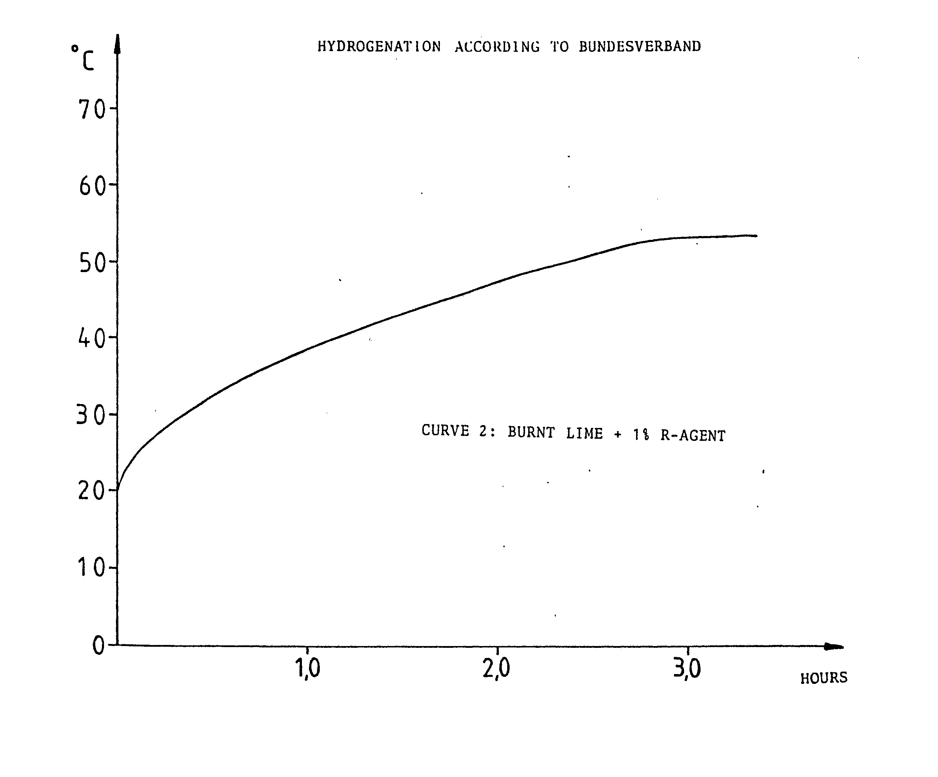

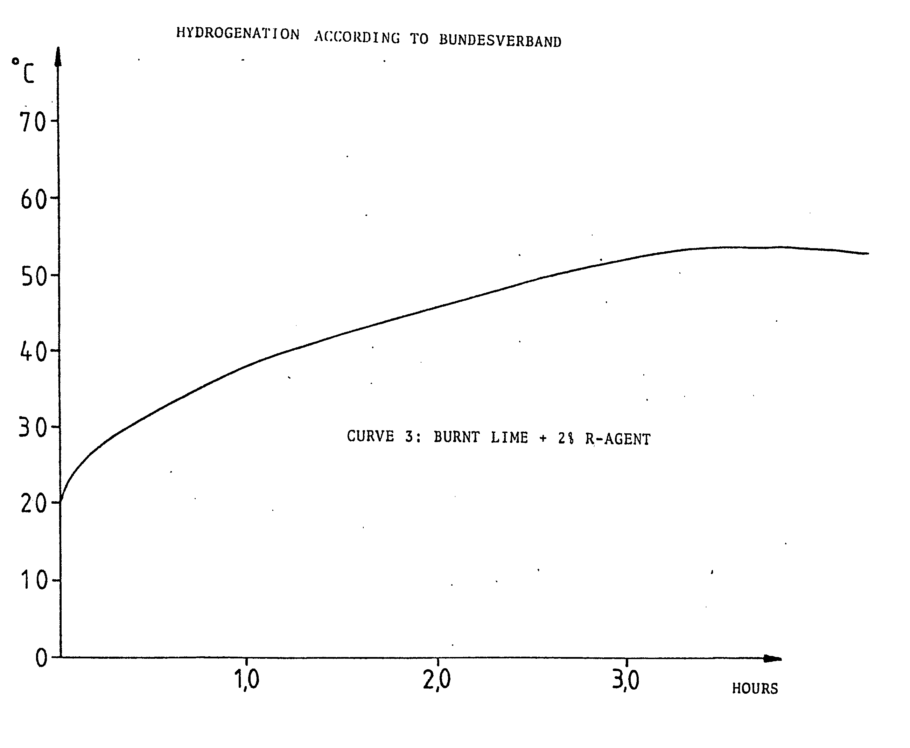

## Claims

1. Demolishing agent of the type utilizing for the demolishing work an expansion obtained at the hydrogenation of burnt lime and comprising in addition to burnt lime a hydraulic component and a plasticizing agent, the demolishing agent forming a hardening body prior to the hydrogenation and expansion of the lime, characterized in that the particles of burnt lime are coated with one or more organic slaking retarding substances.

2. A demolishing agent as defined in claim 1, characterized in that it comprises 50—100% burnt lime, 1—5% — preferably 0,5—2% — organic retarding substances in per cent of the lime amount and the rest hydraulic components.

3. A demolishing agent as defined in claim 1 or 2, characterized in that the organic lime slaking retarding substances are carbohydrates.

4. A demolishing agent as defined in claim 3, characterized in that the lime slaking retarding substances consist of both single and composed starch species and/or sugar species.

5. A demolishing agent as defined in claim 3, characterized in that the lime slaking retarding substances are mucic acids.

6. A demolishing agent as defined in any one of the claims 1—5, characterized in that the hydraulic component is Portland cement.

7. A demolishing agent as defined in any one of the preceding claims, characterized in that modifying plasticizers, preferably to an amount corresponding to 1—5 per cent by weight, have been added to it.

8. A demolishing agent as defined in claim 7, characterized in that the modifying plasticizer can be of the type comprising polymers, polymethyl metacrylate and polystyrene, metal salt of condensed naphthalin sulfonic acid/formaldehyde condensate (melamin resin), polyoxyethylene, alkyl ether etc.

9. A method of manufacturing a demolishing agent in accordance with any one of the claims 1—8, of burnt lime, the particles of which are coated with organic retarding substance, a hydraulic component and plasticizers, characterized in that the burnt lime first is coated with retarding substances by co-grinding, whereafter the burnt coated lime is mixed with the hydraulic component and plasticizer.

10. A method of using a demolishing agent according to any one of the claims 1—8, consisting of burnt lime coated with organic retarding agents, hydraulic component and plasticizer, characterized in that the demolishing agent is mixed with water and that the resulting slurry is placed in to drill holes in the material to be demolished, whereafter the hardening agent expands as a consequence of the late reaction of the lime with water, so that the pressure stresses of the agent exceed the tensile stresses in the material around the hole in order to bring about crack formations and blasting to pieces.

11. A demolishing agent as defined in any one of the claims 1—8, characterized in that a dispersing agent is ground into the lime and/or cement prior to or in connection with the mixing of these components.

12. A demolishing agent as defined in claim 11, characterized in that the dispersing agent is a dispersing agent which does not entrain air.

13. A demolishing agent as defined in claim 11 or 12, characterized in that the dispersing agent consists of hydroxylamines and/or sulfonated alkyls.

14. A demolishing agent as defined in claim 11, characterized in that the dispersing agent consists of triethanolamine.

15. A demolishing agent as defined in claim 14, characterized in that the triethanolamin is added in an amount corresponding to 1—15% of the lime weight.

16. A method of manufacturing a demolishing agent according to claim 11 with an addition of dispersing agent, characterized in that coarsely crushed normal burnt lime at the fine distribution by grinding in addition to the retarding agent is added with a dispersing agent in an amount of 1—5% of the weight of the lime.

17. A method as defined in claim 16, characterized in that the lime is ground together with antifoaming agent with retarding agent and, respectively, dispersing agent, or that antifoaming agent is added in a later process step.

18. A demolishing agent according to claims 11—15, characterized in that it consists of burnt retarded lime (CaO) with an addition of dispersing agent, that at application it is mixed with water, and the water amount is chosen to be directly above the lowest value required for reacting all lime (at optimum) with water.

**Patentansprüche**

1. Demoliermittel vom Type, der für die Demolierbarkeit eine Expansion verwendet, die bei der Hydrierung von Branntkalk erhalten wird, und der außer Branntkalk eine hydraulische Komponente und einen Weichmacher umfaßt, wobei das Demoduliermittel vor der Hydrierung und Expansion vom Kalke einen Härtekörper bildet, dadurch gekennzeichnet, daß die Partikeln von Branntkalk mit einem oder mehreren organischen, Löschung retardierenden Substanzen überzogen werden.

2. Demoliermittel nach Anspruch 1, dadurch gekennzeichnet, daß es 50—100% von Branntkalk, 1—5%, vorzugsweise 0.5—2%, von organischen retardierenden Substanzen in % der Kalkmenge und den Rest hydraulische Komponenten umfaßt.

3. Demoliermittel nach Anspruch 1 oder 2, dadurch gekennzeichnet, daß die organischen, die Löschung des Kalks retardierenden Substanzen Kohlenhydrate sind.

4. Demoliermittel nach Anspruch 3, dadurch gekennzeichnet, daß die Kalklöschung retardierenden Substanzen aus sowohl einfachen als auch zusammengesetzten Stärke- und/oder Zuckerarten bestehen.

5. Demoliermittel nach Anspruch 3, dadurch gekennzeichnet, daß die Kalklöschung retardierenden Substanzen Schleimsäuren sind.

6. Demoliermittel nach einem der Ansprüche 1—5, dadurch gekennzeichnet, daß die hydraulische Komponente Portlandzement ist.

7. Demoliermittel nach einem der vorhergehenden Ansprüche, dadurch gekennzeichnet, daß die modifizierenden Weichmacher vorzugsweise in einer Menge entsprechend 1—5 Gew.-% zugesetzt worden sind.

8. Demoliermittel nach Anspruch 7, dadurch gekennzeichnet, daß der modifizierende Weichmacher vom Type sein kann, der Polymere, Polymethylmethakrylat und Polystyren, Metallsalz von kondensiertem Naphthalinsulfonsäure/Formaldehydkondensat (Melaminharz), Polyoxyäthylen, Alkyläther etc. umfaßt.

9. Verfahren zur Herstellung von einem Demoliermittel aus Branntkalk nach einem der Ansprüche 1—8, dessen Partikeln mit einer organischen retardierenden Substanz, einer hydraulischen Komponente und Weichmachern überzogen sind, dadurch gekennzeichnet, daß der Branntkalk zuerst mit retardierenden Substanzen durch Zusammenmahlen überzogen wird, wonach der überzogene Branntkalk mit der hydraulischen Komponente und Weichmachern gemischt wird.

10. Verfahren zur Verwendung von einem Demoliermittel nach einem der Ansprüche 1—8, das aus Branntkalk besteht, der mit organischen Retardiermitteln, hydraulischer Komponente und Weichmacher überzogen ist, dadurch gekennzeichnet, daß das Demoliermittel mit Wasser gemischt wird und daß die resultierende Aufschlämmung in Bohrungen in dem zu demolierenden Material placiert wird, wonach der Härter infolge der späten Reaktion des Kalks mit Wasser expandiert, so daß die Druckbeanspruchungen des Mittels die Zugbeanspruchungen im Material rings um die Bohrung überschreiten, um Rißbildungen und Sprengen zu bewirken.

11. Demoliermittel nach einem der Ansprüche 1—8, dadurch gekennzeichnet, daß ein Dispergiermittel in den Kalk und/oder Zement im Zusammenhang mit der Mischung dieser Komponenten gemahlt wird.

12. Demoliermittel nach Anspruch 11, dadurch gekennzeichnet, daß das Dispergiermittel ein Dispergiermittel ist, das nicht Luft mitreißt.

13. Demoliermittel nach Anspruch 11 oder 12, dadurch gekennzeichnet, daß das Dispergiermittel aus Hydroxylaminen und/oder sulfonierten Alkylen besteht.

14. Demoliermittel nach Anspruch 11, dadurch gekennzeichnet, daß das Dispergiermittel aus Triäthanolamin besteht.

15. Demoliermittel nach Anspruch 14, dadurch gekennzeichnet, daß das Triäthanolamin in einer Menge von 1—5% des Kalkgewichts zugesetzt wird.

16. Verfahren zur Herstellung von einem Demoliermittel nach Anspruch 11 mit einer Zugabe von Dispergiermittel, dadurch gekennzeichnet, daß normaler, grob gebrochener Branntkalk bei der Feinverteilung durch Mahlen nebst Retardiermittel mit einem Dispergiermittel in einer Menge von 1—5 Gew.-% des Kalks zugesetzt wird.

17. Verfahren nach Anspruch 16, dadurch gekennzeichnet, daß der Kalk zusammen mit Antischaummittel, Retardiermittel und Dispergiermittel gemahlt wird oder daß Antischaummittel in einer späteren Verfahrensstufe zugesetzt wird.

18. Demoliermittel nach den Ansprüchen 14—15, dadurch gekennzeichnet, daß es aus gebranntem retardiertem Kalk (CaO) mit einem Zusatz von Dispergiermittel besteht, daß es bei der Anwendung mit Wasser gemischt wird, und die Wassermenge derart gewählt wird, daß sie unmittelbar über dem untersten Wert ist, der erforderlich wird, um allen Kalk (maximal) mit Wasser zu reagieren.

**Revendications**

1. Agent démolissant du type utilisant pour le travail de démolition une expansion obtenue à l'hydrogénation de la chaux calcinée et comprenant, en plus de la chaux calcinée, un composant hydraulique et un agent plastifiant, l'agent démolissant formant un corps durcissant préalablement à l'hydrogénation et à l'expansion de la chaux, caractérisé en ce que les particules de chaux calcinée sont enrobées d'une ou de plusieurs substances organiques retardant l'extinction.

2. Agent démolissant selon la revendication 1, caractérisé en ce qu'il comprend de 50 à 100% de chaux calcinée, de 1 à 5% — de préférence de 0,5 à 2% — de substances retardatrices organiques, le pourcentage étant calculé par rapport à la quantité de chaux, et pour le reste des composants hydrauliques.

3. Agent démolissant selon la revendication 1 ou 2, caractérisé en ce que les substances organiques retardant l'extinction de la chaux sont constituées par des glucides.

4. Agent démolissant selon la revendication 3, caractérisé en ce que les substances retardant l'extinction de la chaux sont constituées par des espèces simples et composées d'amidon et/ou de sucre.

5. Agent démolissant selon la revendication 3, caractérisé en ce que les substances retardant l'extinction de la chaux sont constituées par des acides muciques.

6. Agent démolissant selon une quelconque des revendications 1 à 5, caractérisé en ce que le composant hydraulique est constitué par du portland.

7. Agent démolissant selon une quelconque des revendications précédentes, caractérisé en ce que des plastifiants modificateurs, de préférence en quantité correspondant à 1 à 5 pour cent en poids, y ont été ajoutés.

8. Agent démolissant selon la revendication 7, caractérisé en ce que le plastifiant modificateur peut être du type comprenant des polymères, du polyméthacrylate de méthyle et du polystyrène, du sel métallique d'acide naphthaline-sulfonique condensé/condensat de formaldéhyde (résine de mélamine), du polyoxyméthylène, de l'éther alkyle etc.

9. Procédé de fabrication d'un agent démolissant selon une quelconque des revendications 1 à 8 à partir de chaux calciné dont les particules sont enrobées d'une substance retardatrice organique, d'un composant hydraulique et de plastifiants, caractérisé en ce que la chaux calcinée est d'abord enrobée de substances retardatrices par broyage ensemble, après quoi la chaux calcinée ainsi enrobée est mélangée avec la composant hydraulique et le plastifiant.

10. Procédé d'utilisation d'un agent démolissant selon une quelconque des revendications 1 à 8 composé de chaux calcinée enrobée d'agents retardateurs organiques, d'un composant hydraulique et d'un plastifiant, caractérisé en ce que l'agent démolissant est mélangé avec de l'eau et que le coulis ainsi obtenu est placé dans des trous forés dans le matériau à démolir, après quoi l'agent durcissant se dilate à la suite de la réaction tardive de la chaux avec l'eau, en sorte que les efforts de pression de l'agent dépassent les efforts de tension du matériau autour du trou afin d'amener l'apparition de fissures et l'éclatement.

11. Agent démolissant selon une quelconque des revendications 1 à 8, caractérisé en ce qu'un agent dispersant est broyé dans la chaux et/ou le coment préalablement ou simultanément au mélange de ces composants.

12. Agent démolissant selon la revendication 11, caractérisé en ce que l'agent dispersant n'entraîne pas l'air.

13. Agent démolissant selon la revendication 11 ou 12, caractérisé en ce que l'agent dispersant est composé d'hydroxylamines et/ou d'alkyles sulfonés.

14. Agent démolissant selon la revendication 11, caractérisé en ce que l'agent dispersant est constitué par de la triéthanolamine.

15. Agent démolissant selon la revendication 14, caractérisé en ce que la triéthanolamine est ajoutée en quantité correspondant à 1 à 5% du poids de la chaux.

16. Procédé de fabrication d'un agent démolissant selon la revendication 11 avec addition d'un agent dispersant, caractérisé en ce que de la chaux calcinée normale, grossièrement concassée, réduite en particules fines par broyage avec l'agent retardateur, est additionnée d'un agent dispersant à raison de 1 à 5% du poids de la chaux.

17. Procédé selon la revendication 16, caractérisé en ce que la chaux, additionnée d'un agent antimousse, est broyée avec l'agent retardateur et l'agent dispersant respectivement, ou bien que l'agent antimousse est ajouté à une étape ultérieure du procédé.

18. Agent démolissant selon les revendications 14 et 15, caractérisé en ce qu'il est composé de chaux retardée calcinée (CaO) avec addition d'un agent dispersant, qu'il est mélangé avec de l'eau au moment de son utilisation et que la quantité d'eau est choisie pour dépasser légèrement la valeur minimale nécessaire pour faire réagir toute la chaux (à l'optimum) avec l'eau.

HYDROGENATION ACCORDING TO BUNDESVERBAND

CURVE 1: BURNT LIME

0 110 936

HYDROGENATION ACCORDING TO BUNDESVERBAND

CURVE 2: BURNT LIME + 1% R-AGENT

HOURS

0 110 936

HYDROGENATION ACCORDING TO BUNDESVERBAND

CURVE 3: BURNT LIME + 2% R-AGENT